# FASCICULE DE BREVET EUROPEEN

(11) **EP 1 152 109 B1**
(45) Date de publication et mention de la délivrance du brevet: **07.04.2004**
(21) Numéro de dépôt: 01401096.1
(22) Date de dépôt: 27.04.2001
(51) Int. Cl.: E05B 49/00, G01S 13/76

(54) **Système pour le démarrage et/ou l'accès mains libres d'un véhicule automobile**
Handfreies Zugangs- und/oder Startsystem für Kraftfahrzeuge
Hand-free access and/or starting system for a motor vehicle

(30) Priorité: 03.05.2000 FR 0005629
(43) Date de publication de la demande: 07.11.2001
(73) Titulaire: Delphi Technologies, Inc., Troy, MI 48007 (US)
(72) Inventeur: Lelandais, Guy, 91190 Gif-sur-Yvette (FR)
(74) Mandataire: Abello, Michel

(56) Documents cités:
- EP-A- 0 676 650
- EP-A- 0 983 916
- WO-A-00/12848

## Description

La présente invention concerne un système d'accès dit mains libres pour véhicule automobile, c'est à dire un système de communication non filaire permettant d'entrer dans le véhicule sans clé. Ce système peut également s'appliquer au démarrage mains libres du véhicule, c'est à dire au démarrage sans clé.

Un tel système comporte généralement un dispositif d'identification destiné à être porté par un utilisateur et apte à établir une communication bidirectionnelle à distance et sans fil avec une unité centrale de commande embarquée sur le véhicule, pour authentifier l'utilisateur et commander des moyens de condamnation/décondamnation des serrures des ouvrants lorsque l'utilisateur a été reconnu authentique. L'initialisation du protocole de communication peut être activée en actionnant la poignée extérieure de porte, pour l'accès mains libres, ou en appuyant sur un bouton de démarrage, dans le mode démarrage mains libres. Le système est apte à établir ladite communication bidirectionnelle lorsque le dispositif d'identification est situé à une distance inférieure à une distance limite prédéterminée du véhicule, généralement de l'ordre de quelques mètres, pour éviter, d'une part, les interférences avec d'autres sources de signaux de l'environnement, et, d'autre part, pour éviter le fonctionnement du système à une distance telle que l'utilisateur est trop éloigné du véhicule pour être conscient des opérations effectuées par ledit système.

Certains systèmes actuellement proposés utilisent des systèmes à induction magnétique à très courte portée, pour à la fois alimenter en énergie et transporter les informations depuis l'unité centrale du véhicule vers le dispositif d'identification qui se trouve dans le champ électromagnétique engendré par les antennes du véhicule. Toutefois, un tel système ne permet une communication qu'à très courte distance du véhicule de l'ordre de quelques cm. Un autre système couramment proposé consiste à utiliser des ondes porteuses à basse fréquence, de l'ordre de 125 kHz pour la communication depuis le véhicule vers le dispositif d'identification, et des ondes porteuses à ultra haute fréquence, par exemple de l'ordre de 434 ou 868 MHz, pour la zone Europe, et de 315 ou 902 MHz pour la zone USA. Toutefois, dans ce cas, le dispositif d'identification doit comporter une pile pour alimenter ses circuits électroniques propres. Pour minimiser la consommation électrique, on peut prévoir, à titre d'exemple, que le dispositif d'identification soit en sommeil pendant 9 ms et en éveil 1 ms, pendant des périodes de 10 ms.

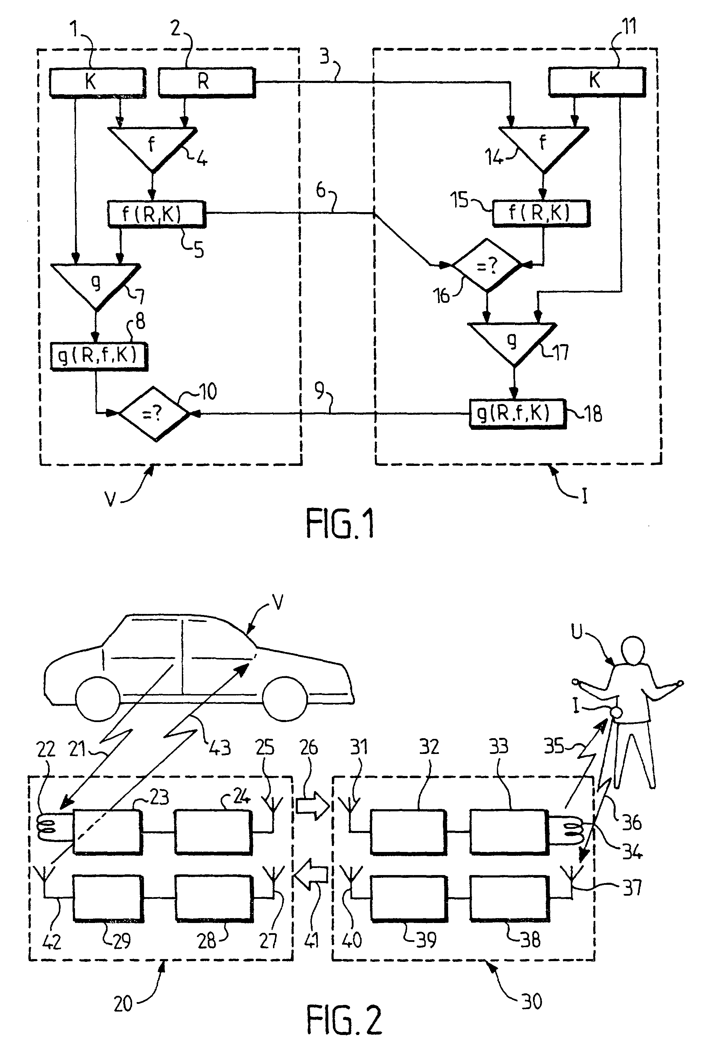

Bien entendu, la communication bidirectionnelle entre le véhicule et le dispositif d'identification est cryptée, afin d'éviter tout fonctionnement intempestif du système et pour le sécuriser vis à vis des malfaiteurs. Sur la figure 1 des dessins annexés, on a représenté un exemple de système d'encryptage déjà connu. Sur cette figure 1, on a représenté un véhicule V qui comporte dans son unité centrale une mémoire 1 contenant une clé secrète K et un générateur de nombres aléatoires 2, les nombres aléatoires R engendrés ayant, par exemple, une longueur de 56 bits. Ce nombre aléatoire R est émis vers le dispositif d'identification I, comme indiqué par la flèche 3. Simultanément, ce même nombre aléatoire R est mélangé avec la clé secrète K suivant une fonction associative complexe f, dans un mélangeur 4 qui est relié à son entrée à la mémoire 1 et au générateur de nombres aléatoires 2. Le mélangeur 4 délivre, en sortie, un signal représentatif du mélange de la clé secrète K et du nombre aléatoire R, à savoir le signal f(R, K). Ce signal est mémorisé dans une mémoire 5 reliée à la sortie du mélangeur 4. Ce signal est envoyé au dispositif d'identification I, sous la forme d'un signal d'une longueur par exemple de 28 bits, comme indiqué par la flèche 6. Dans le véhicule V, le signal f(R, K) est mélangé à nouveau à la clé secrète K dans un mélangeur 7, qui est relié à son entrée aux mémoires 1 et 5 précitées. Ce mélangeur 7 mélange les deux signaux suivant une fonction associative complexe g. Le véhicule V mémorise alors dans une mémoire 8 reliée à la sortie du mélangeur 7 le signal représentatif du mélange, à savoir le signal g(R, f, K).

Du côté du dispositif d'identification, la même clé secrète K est mémorisée dans une mémoire 11 et un mélangeur 14 ayant la même fonction associative f reçoit en entrée la clé secrète fournie par la mémoire 11 du dispositif d'identification I et le nombre aléatoire R reçu par le dispositif d'identification en provenance du véhicule. Le dispositif d'identification I mémorise le signal en sortie du mélangeur 14 dans une mémoire 15 et compare ce signal dans un comparateur 16 avec le signal reçu suivant la flèche 6 en provenance du véhicule V. Si les deux signaux ne sont pas identiques, sous réserve du temps de retard propre au matériel et à la transmission du signal dans la zone de transmission autorisée, le dispositif d'identification interrompt la communication comme étant non-autorisée. En revanche, si les deux signaux correspondent, le signal est mélangé dans un mélangeur 17 avec la clé secrète fournie par la mémoire 11 du dispositif d'identification I, suivant la même fonction associative g précitée. Le signal de sortie du mélangeur 17 est mémorisé dans une mémoire 18 du dispositif d'identification pour être ensuite envoyé vers le véhicule suivant la flèche 9 sous la forme d'un signal ayant une longueur par exemple de 20 bits. Enfin, le signal reçu par la flèche 9 est comparé avec le signal reçu de la mémoire 8 du véhicule dans un comparateur 10. Si ces deux signaux correspondent, sous réserve des retards dus au temps de réponse du matériel et de la transmission du signal dans la zone autorisée, le reste de la communication est autorisé et l'unité centrale du véhicule pourra, le cas échéant, commander la condamnation ou la décondamnation des serrures des ouvrants du véhicule. Bien entendu, un autre protocole de cryptage pourra être utilisé pour sécuriser la transmission des données.

Toutefois, malgré ce protocole de cryptage, il existe une façon de pirater le système, sans connaître ni la clé secrète, ni les différentes fonctions associatives du protocole d'encryptage. Ce procédé de piratage est représenté sur la figure 2. Selon ce procédé, on suppose que l'utilisateur U qui porte le dispositif d'identification I est situé à une distance du véhicule V supérieure à la distance autorisée de communication, par exemple de 10 à 100 m de distance du véhicule. Dans ce cas, un pirate équipé d'un premier boîtier relais 20 peut s'approcher du véhicule V à une distance suffisante pour communiquer avec celui-ci, par exemple à une distance de l'ordre de 1 à 5 m. Ce pirate actionne le début de la communication, par exemple en tirant sur la poignée extérieure de portière. Ceci déclenche l'émission des signaux basse fréquence par le véhicule vers le boîtier relais 20, comme indiqué par la flèche en zig-zag 21. Ce signal 21 envoyé par le véhicule est reçu par une bobine 22 du boîtier relais 20, qui est reliée à un récepteur 23 à 125 kHz. Ce récepteur 23 est relié à un émetteur à large bande à haute fréquence, de l'ordre de plusieurs MHz. L'émetteur 24 émet via son antenne 25, comme représenté par la flèche 26, vers un deuxième boîtier relais 30, qui est porté par un autre pirate qui suit de près l'utilisateur U. L'échange d'informations entre les deux boîtiers relais 20 et 30 s'effectuant à très haute fréquence, il est possible d'effectuer cette communication à grande distance. Le deuxième boîtier relais 30 comporte une antenne 31 pour recevoir le signal 26 émis par le boîtier relais 20. L'antenne 31 est reliée à un récepteur large bande à la même fréquence que l'émetteur 24 du premier boîtier relais 20. Le signal ainsi reçu est retransmis à basse fréquence à 125 kHz par un émetteur 33 qui est relié à une bobine d'émission 34 afin d'envoyer un signal 35 vers le dispositif d'identification I qui soit conforme au signal 21 émis par le véhicule. Le signal 35 étant la répétition du signal authentique du véhicule, le dispositif d'identification I va le reconnaître et émettre à son tour son signal de réponse 36, ledit signal de réponse 36 étant envoyé à haute fréquence et reçu par une antenne 37 du deuxième boîtier relais 30, par exemple à 434 MHz. L'antenne 37 est reliée à un récepteur 38, qui va convertir le signal à 434 MHz en un signal à une fréquence différente, par exemple à 315 MHz. Le signal est alors émis par un émetteur à large bande 39 via une antenne 40 vers le premier boîtier relais 20, cette différence de fréquence étant nécessaire pour que les différents signaux n'interfèrent pas entre eux. Bien entendu, la fréquence du signal 41 émis en retour par le deuxième boîtier relais 30 est différente à la fois de la fréquence du signal 26 et du signal 36. Ce signal 41 est capté par une antenne 27 du premier boîtier relais 20, ladite antenne 27 étant reliée à un récepteur large bande 28 de la même fréquence que l'émetteur 39. Le récepteur 28 est relié à un émetteur 29 qui transforme le signal à 315 MHz en un signal à 434 MHz qui est envoyé via l'antenne 42 du premier boîtier relais 20 vers le véhicule V, comme représenté par la flèche en zig-zag 43.

Il suffit que les pirates utilisent des boîtiers relais ayant des liaisons à large bande, par exemple supérieure à 50 MHz, ce qui est possible car les systèmes pirates n'ont pas à respecter les réglementations ; le temps de transit supplémentaire dû à la distance peut être alors de l'ordre de quelques nanosecondes, ce qui est négligeable en comparaison avec les constantes de temps nécessaires pour la transmission normale autorisée. A titre d'exemple, la communication totale peut être de l'ordre de 20 à 40 ms, et la durée totale du fonctionnement du système pour déclencher la décondamnation ou la condamnation des serrures élect riques peut être de l'ordre de 100 ms.

Pour détecter un tel piratage et interrompre la communication, une solution pourrait consister à mesurer le temps de propagation des ondes radio UHF, en comparant ce temps mesuré avec un temps prédéterminé correspondant à une communication dans une zone limitée autorisée autour du véhicule. Ce temps de propagation, compte tenu des distances concernées, est très faible, de l'ordre de quelques ns à quelques dizaines de ns. Pour différencier des temps aussi courts, on a habituellement recours à des bandes passantes très larges de l'ordre de 10 MHz. L'intérêt de la présente invention consiste à avoir recours à une bande passante, nettement moins large, par exemple de l'ordre de 1 MHZ, telle que par exemple à la fréquence de 433,9 MHz.

Le document EP-A-676 650 décrit un dispositif pour mesurer une distance par une transmission synchrone de données entre une station d'émission réception munie d'une boucle à verrouillage de phase numérique et un transpondeur également muni d'une boucle à verrouillage de phase numérique.

Le document EP-A-983 916 décrit un système conforme au préambule de la revendication 1.

L'invention a pour but d'éliminer les inconvénients précités et de proposer un système d'accès dit mains libres pour véhicule automobile, permettant de détecter un piratage du système, notamment par l'intermédiaire de boîtiers relais, en prenant compte du temps de propagation du signal entre le véhicule et le dispositif d'identification.

A cet effet, l'invention a pour objet un système d'accès dit mains libres pour véhicule automobile, tel que défini dans la revendication 1.

Avantageusement, ledit moyen de détermination de l'unité centrale comporte un mélangeur apte à mélanger, d'une part, le signal délivré en sortie de l'unité de décision de bits à ladite cadence de référence et, d'autre part, ledit signal crypté correspondant engendré par l'unité centrale à ladite cadence prédéterminée pour délivrer en sortie du mélangeur un signal représentatif des décalages temporels successifs de chaque bit dudit signal crypté de réponse, le mélangeur étant relié à un intégrateur pour faire la somme des temps de réponse liés à chaque créneau de décalage temporel de bit dudit signal, la sortie dudit intégrateur étant reliée à au moins un premier comparateur pour comparer ladite somme de temps de réponse avec ladite première valeur de seuil prédéterminée. Dans ce cas, on peut prévoir que la somme des temps de réponse effectuée par l'intégrateur est arrêtée lorsque l'unité centrale de commande détecte la réception du dernier bit du signal crypté de réponse en provenance du dispositif d'identification.

Selon une autre caractéristique, la sortie de l'intégrateur est reliée à au moins un second comparateur pour comparer ladite somme de temps de réponse avec une autre valeur de seuil prédéterminée inférieure à ladite première valeur de seuil prédéterminée, au-delà de laquelle est détectée une communication au-delà de la distance limite prédéterminée.

Selon encore une autre caractéristique, le dispositif d'identification comporte un détecteur de fin de trame du signal d'interrogation, apte à déclencher l'émission du signal crypté de réponse, à ladite cadence de référence par le dispositif d' identification, lorsque la fin de la trame du signal d'interrogation est détectée. Dans ce cas, on peut prévoir que ledit détecteur de fin de trame est apte à reconnaître soit des données de fin d'interrogation dans ledit signal d'interrogation, soit des données de début d'interrogation dans ledit signal d'interrogation, pour en déduire la fin de sa trame en fonction du nombre prédéterminé de bits devant être reçus par le dispositif d'identification en provenance de l'unité centrale.

On peut prévoir que le dispositif d'identification comporte un oscillateur générateur d'onde porteuse en radio-fréquence, relié en sortie à un modulateur de phase ou d'amplitude, qui est commandé par le signal numérique crypté de réponse du dispositif d'identification. Le dispositif d'identification peut également comporter une unité de décision de bits dont la cadence de référence est délivrée par la première boucle de verrouillage de phase, ladite unité de décision de bits recevant en entrée le signal d'interrogation, pour délivrer en sortie un signal numérique à ladite cadence de référence, représentant ledit signal d'interrogation, par exemple en vue de comparer ledit signal avec un signal correspondant engendré par le dispositif d'identification.

Avantageusement, le signal délivré en sortie par l'unité de décision de bits de l'unité centrale est comparé par cette dernière avec un signal numérique crypté correspondant engendré par l'unité centrale, afin d'authentifier le dispositif d'identification.

On peut également prévoir que l'unité centrale comporte un oscillateur générateur d'onde porteuse en radio-fréquence, relié à un modulateur de phase ou d'amplitude, qui est commandé par ledit signal numérique d'interrogation engendré par l'unité centrale.

Dans une forme de réalisation particulière, l'unité centrale est apte à commander successivement l'arrêt puis le démarrage de l'oscillateur de l'unité centrale, selon que celle-ci est en phase d'émission du signal d'interrogation, puis en phase de réception du signal de réponse.

L'invention sera mieux comprise, et d'autres buts, détails, caractéristiques et avantages de celle-ci apparaîtront plus clairement au cours de la description explicative détaillée qui va suivre d'un mode de réalisation particulier de l'invention, donné uniquement à titre illustratif et non limitatif, en référence au dessin schématique annexé, dans lequel :
- la figure 1 est un schéma synoptique fonctionnel représentant le protocole d' encryptage pour sécuriser la transmission bidirectionnelle de données entre un véhicule et un dispositif d'identification ;
- la figure 2 est un schéma synoptique fonctionnel illustrant un moyen de piratage du système d'encryptage par l'intermédiaire de deux boîtiers relais ;
- la figure 3 est un schéma synoptique fonctionnel simplifié d'un système d'accès mains libres conforme à l'invention ;
- la figure 4 est un schéma synoptique fonctionnel plus détaillé correspondant au schéma de la figure 3 ;
- la figure 4A est un schéma synoptique fonctionnel d'un détail du dispositif d'identification représenté sur la figure 4 ;
- la figure 5 représente plusieurs chronogrammes illustrant les trames complètes d'interrogation émises et reçues par le véhicule et par le dispositif d'identification ;
- la figure 6 est une vue partielle et agrandie d'une portion des chronogrammes de la figure 5, indiquée par la flèche VI, au cours de la séquence d'interrogation par le véhicule ; et
- la figure 7 est une vue partielle et agrandie d'une portion des chronogrammes de la figure 5, indiquée par la flèche VII, au cours de la séquence de réponse par le dispositif d'identification.

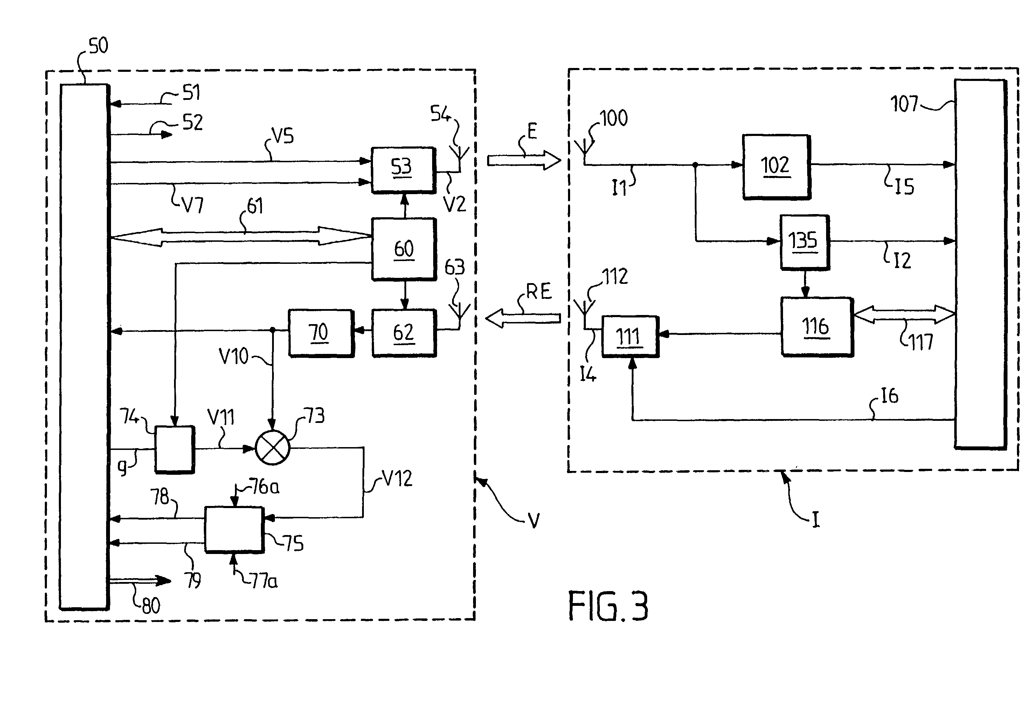

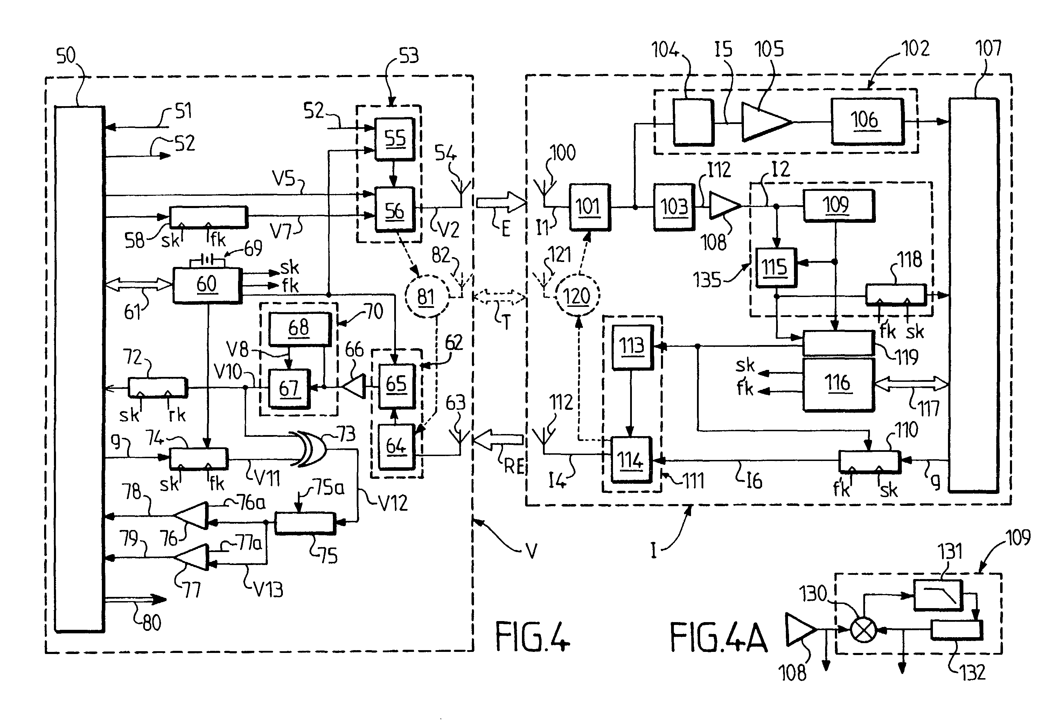

On va maintenant se référer aux figures 3 et 4, qui représentent le système d'accès mains libres selon l'invention respectivement sous forme simplifiée et plus détaillée.

Le véhicule automobile V comporte dans son unité centrale un micro-contrôleur 50, qui est généralement dans un état de semi-sommeil ou d'attente d'un réveil. Lorsque l'utilisateur actionne la poignée extérieure de porte, un signal d'activation est envoyé au micro-contrôleur 50, comme indiqué par la flèche 51. En réponse, le micro-contrôleur envoie un signal d'alimentation général, comme représenté par la flèche 52, pour alimenter les différents composants électroniques de l'unité centrale. Puis, le micro-contrôleur 50 engendre un signal d'éveil e à faible cadence sk, par exemple de l'ordre de 2 à 100 Kb/s sur la ligne V5. La ligne V5 est reliée à un émetteur 53 pour émettre via une antenne 54 les signaux vers le dispositif d'identification I comme représenté par la flèche E. L'émetteur 53 comporte, comme mieux visible sur la figure 4, un oscillateur 55 pour engendrer une onde porteuse à haute fréquence, par exemple à quelques centaines de MHz, ledit oscillateur étant alimenté par la ligne 52. L'oscillateur 55 est relié à un modulateur de phase 56 ou un modulateur d'amplitude du type à modulation à 50 % et à 100 % selon que la valeur du bit transmis est à 0 ou 1, dont la sortie est reliée à l'antenne 54 précitée.

Le signal émis E, par exemple avec une amplitude de l'ordre de 2V efficace, est reçu par une antenne 100 du dispositif d'identification I avec une atténuation de l'ordre de -40 dBm, ce qui représente un coefficient d'atténuation de 100 fois, c'est à dire que le signal reçu par le dispositif d'identification présente une amplitude de l'ordre de 20 mV. L'antenne 100 est reliée, via la ligne I1, à un filtre radio-fréquence 101 (uniquement représenté sur la figure 4) pour éliminer les fréquences parasites. La sortie du filtre 101 est reliée à un embranchement, d'une part, vers un récepteur à faible cadence et à faible consommation 102 et, d'autre, part à un amplificateur logarithmique 103 qui permet de délivrer en sortie un signal de l'ordre de 2V efficace, et sert de récepteur haute fréquence. Les signaux à faible cadence sk ne sont pas transmis par l'amplificateur 103, mais passent essentiellement via le récepteur 102. Comme mieux visible sur la figure 4, le récepteur 102 comprend successivement un détecteur d'enveloppe radio-fréquence 104 pour reconstituer les signaux à faible cadence sur la ligne 15, qui correspondent à ceux de la ligne V5. La sortie du détecteur d'enveloppe 104 est reliée à un amplificateur basse fréquence 105, dont la sortie est reliée à un décodeur de séquence d'éveil 106. Au démarrage de la communication avec le véhicule, seul le décodeur 106 est alimenté en permanence par la pile du dispositif d'identification. Autrement dit, les données d'éveil e sont décodées par le décodeur 106, afin d'envoyer un ordre d'éveil au micro-contrôleur 107, à la sortie du décodeur 106. Le micro-contrôleur 107 éveille alors tous les autres composants électroniques du dispositif d'identification. Ainsi, les données suivantes, à savoir les signaux R, f et s, sont transmis au micro-contrôleur 107 via l'amplificateur 103.

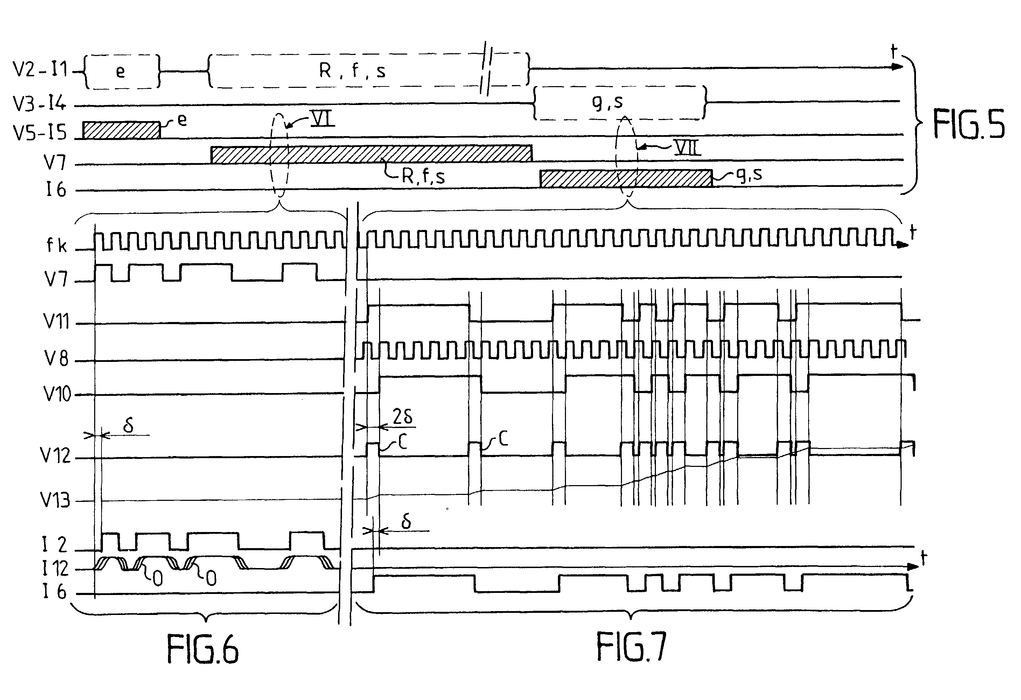

Après émission des données d'éveil e, le micro-contrôleur 50 du véhicule V engendre, à la cadence lente sk du micro-processeur, un signal numérique représentatif d'un nombre aléatoire R d'une longueur, par exemple de 56 bits, un signal numérique représentatif de la fonction f(R,K) d'une longueur par exemple de 28 bits, et un signal représentatif de données de service s, par exemple d'une longueur de 100 à 5 000 bits, par exemple des données sur la maintenance, le réglage du véhicule, etc (voir figure 5), lesdits signaux R, f, s étant reçus par une mémoire-tampon 58, pour délivrer en sortie lesdits signaux à haute cadence fk, sur une ligne V7. La sortie de la mémoire tampon 58 est reliée au modulateur de phase ou d'amplitude 56 pour moduler en phase l'onde porteuse engendrée par l'oscillateur 55, chaque signal étant transmis sous la forme d'un signal radio-fréquence via l'antenne 54 en direction du dispositif d'identification I. La trame globale d'émission V2 des signaux par l'antenne 54 est illustrée sur la figure 5. En se référant plus particulièrement à la figure 6, on a représenté, à plus grande échelle, une portion de la trame d'interrogation sur la ligne V2. Chaque bit d'interrogation est porté par une onde oscillante à haute fréquence ayant un temps bit par exemple de l'ordre de 500 ns pour une cadence fk de l'ordre de 2 Mb/s. Bien entendu, la fréquence fk pourrait être plus faible, ce qui entraînerait un temps bit d'autant plus long. Une unité de gestion de base de temps 60 du véhicule V est apte à délivrer les signaux d'horloge à faible cadence sk et à haute cadence fk sur la base d'un signal délivré par un quartz 69. Bien entendu, l'unité 60 est reliée au micro-contrôleur 50, comme indiqué par la double flèche 61. L'unité 60 commande successivement l'arrêt ou le démarrage de l'oscillateur 55 de l'émetteur 53 et d'un amplificateur 65 d'un récepteur 62 de l'unité centrale.

Le dispositif d'identification I reçoit via son antenne 100 sur la ligne I1 un signal qui correspond au signal d'interrogation émis par le véhicule V, avec un temps retard δ qui correspond au temps de propagation du signal entre le véhicule et le dispositif d'identification. Le signal passe alors par l'amplificateur 103, ce dernier délivrant en sortie un signal représenté sur la ligne I12 à la figure 6, qui correspond à l'enveloppe du signal analogique reçu par le dispositif d'identification en provenance du véhicule. On constate sur la figure 6 que le signal I12 en sortie de l'amplificateur 103 présente une forme générale en créneaux, dont les fronts O descendants et montants sont inclinés et peuvent varier sur une certaine plage de valeur, compte tenu des déformations du signal à travers les filtres d'émission du véhicule et de réception du dispositif d'identification. Ces légères variations sur le signal I12 sont symbolisées par des traits triples sur les fronts O montants et descendants des créneaux du signal I12. Pour redresser ce signal I12, la sortie de l'amplificateur 103 est reliée à une unité de remise en forme 108 qui délivre en sortie un signal carré I2 en fonction du passage à 0V du signal analogique I12 en sortie de l'amplificateur 103. L'unité de remise en forme 108 est reliée à une unité de synchronisation de bits à boucle de verrouillage de phase 135. Comme mieux visible sur la figure 4, cette unité 135 comporte, à partir de la sortie de l'unité de remise en forme 108, un embranchement entre, d'une part, une boucle à verrouillage de phase 109 et, d'autre part, une unité de décision de bits 115. Comme mieux visible sur la figure 4A, la boucle à verrouillage de phase 109 comporte un mélangeur 130 recevant, d'une part, le signal en sortie de l'unité de remise en forme 108 et, d'autre part, un signal provenant d'un oscillateur 132 commandé en tension. Le mélangeur 130 délivre en sortie un signal d'erreur qui est reçu par un filtre de boucle constitué d'un filtre passe-bas du premier ordre 131 qui délivre une tension d'erreur pour commander l'oscillateur 132, afin d'accélérer ou de retarder les oscillations, en cas de retard ou d'avance du signal en sortie de l'oscillateur 132 par rapport au signal délivré par l'unité de remise en forme 108 afin de synchroniser les signaux. La sortie de l'oscillateur 132 est également reliée à l'unité de décision de bits 115, pour lui fournir la phase de référence précise du signal d'émission du véhicule. Ainsi, l'unité de décision de bits 115 peut délivrer en sortie un signal analogique représentatif des bits du signal d'interrogation reçu en provenance du véhicule, selon la cadence de référence f'k délivrée par la boucle à verrouillage de phase 109 qui a permis de synchroniser ladite cadence avec celle fk du véhicule. La sortie de l'unité de décision de bits 115 est reliée à un embranchement entre, d'une part, un détecteur de fin de trame 119 et, d'autre part, une mémoire-tampon 118 recevant le signal en sortie de l'unité de décision de bits 115 à la cadence élevée de référence f'k, pour le restituer à la cadence lente sk au micro-contrôleur 107 du dispositif d'identification I, afin que ce dernier puisse authentifier le signal d'interrogation, par exemple comme indiqué à l'étape 16 de la figure 1. En variante, la boucle à verrouillage de phase analogique 109 pourrait être réalisée de façon numérique, en utilisant un diviseur très rapide à 100 MHz ou plus, piloté par un quartz, et associé à une logique de comptage.

Le détecteur de fin de trame 119 est apte à reconnaître des données de fin d'interrogation dans ledit signal d'interrogation, afin de déclencher ultérieurement l'émission du signal de réponse par le dispositif d'identification. En variante, le détecteur 119 est apte à reconnaître des données de début d'interrogation dans ledit signal d' interrogation, et à en déduire la fin de la réception dudit signal par le dispositif d'identification en connaissant le nombre prédéterminé de bits d'interrogation devant être reçus par le dispositif d'interrogation en provenance du véhicule V. Ainsi, il n'est pas possible qu'un pirate piège le détecteur 119 en écourtant l'émission du signal par le véhicule V, car ce détecteur 119 attendra soit les bits de fin d'interrogation soit le nombre de bits prédéterminé à compter du début de l'interrogation. Fonctionnellement, le détecteur 119 fait partie d'une unité de gestion de base de temps 116 qui est reliée au micro-contrôleur 107 via la ligne 117 et qui délivre les signaux d'horloge sk et f'k. La cadence d'horloge de référence f'k est fournie par la boucle à verrouillage de phase 109 au détecteur 119, comme représenté par une flèche. La mémoire-tampon 118 est apte à envoyer les signaux R, f et s au micro-contrôleur 107 du dispositif d'identification. Dans le dispositif d'identification, le signal d'horloge de référence f'k est délivré par la boucle à verrouillage de phase 109 et non par un quartz, contrairement au véhicule V.

A la fin de la réception du signal d'interrogation par le dispositif d'identification, le détecteur de fin de trame 119 est apte à déclencher, d'une part, le démarrage d'un oscillateur générateur d'ondes porteuses en radio-fréquence 113, qui fait partie d'un émetteur 111 du dispositif d'identification et, d'autre part, le fonctionnement d'une mémoire-tampon 110 qui reçoit du micro-contrôleur 107 le signal g à la faible cadence sk, afin de délivrer en sortie ledit signal g à la haute cadence de référence f'k, comme représenté sur la ligne 16 visible sur la figure 7. A la suite du signal crypté de réponse g, des données de service s peuvent également être transmises par le dispositif d'identification vers le véhicule V, comme indiqué sur la figure 5. Le signal crypté de réponse g vient commander un modulateur de phase ou d'amplitude 114 qui fait partie de l'émetteur 111, ledit modulateur 114 recevant en entrée l'onde porteuse délivrée par l'oscillateur 113 et étant relié en sortie à une antenne 112 pour l'émission du signal de réponse RE vers le véhicule V. La trame globale d'émission du signal de réponse par le dispositif d'identification est représentée sur la ligne I4 visible sur la figure 5. Le signal de réponse RE peut être émis avec une amplitude de l'ordre de 2V efficace. A la fin de l'émission du signal RE, l'unité 116 déclenche l'arrêt de l'oscillateur 113 et de la mémoire-tampon 110.

En partant de l'hypothèse que les signaux électromagnétiques transmis se propagent à la vitesse de la lumière, à savoir 3.10⁸ m/s, on peut considérer que la durée de transmission des signaux est de l'ordre de 3 ns par mètre de distance entre le véhicule et le dispositif d'identification I. Autrement dit, pour un trajet aller-retour entre le véhicule V et le dispositif d'identification I, espacé d'une distance d'environ 5 mètres, la durée de propagation δ serait de l'ordre de 30 ns. A cette durée de propagation δ, on pourrait ajouter le temps de réponse des circuits électroniques, qui pourrait être de l'ordre de quelques ns ou dizaines de ns, selon la bande passante attribuée à la porteuse.

Le signal de réponse RE émis par le dispositif d'identification I est reçu par un récepteur 62 via une antenne 63, avec une atténuation de l'ordre de - 40 dBm, ce qui représente un coefficient d'atténuation de 100 fois, c'est à dire que le signal reçu par le véhicule présente une amplitude de l'ordre de 20 mV. Comme mieux représenté sur la figure 4, le récepteur 62 comporte un filtre radio-fréquence 64 relié à l'antenne 63, dont le signal de sortie est délivré à l'entrée de l'amplificateur logarithmique 65 qui présente un gain de 80 dB, ce qui permet d'atteindre un coefficient de multiplication allant jusqu'à 10 000 fois, et notamment de délivrer en sortie dudit amplificateur 65 un signal de l'ordre de 2V efficace. L'amplificateur 65 est commandé par l'unité 60 et est relié en sortie à un circuit de remise en forme 66, analogue à l'unité 108 du dispositif d'identification.

La sortie du circuit de remise en forme 66 est reliée à une unité de synchronisation de bits à boucle à verrouillage de phase 70 analogue à l'unité 135 du dispositif d'identification I. Comme mieux visible sur la figure 4, la sortie du circuit de remise en forme 66 est reliée à un embranchement entre, d'une part, une unité de décision de bits 67 et, d'autre part, une boucle à verrouillage de phase 68 qui délivre en sortie un signal V8 représentatif de la cadence d'horloge de référence rk, vers l'unité de décision de bits 67. La structure de la boucle à verrouillage de phase 68 est analogue à celle de la boucle 109 du dispositif d'identification I. L'unité de décision de bits 67 délivre en sortie un signal V10 qui est représentatif du signal crypté de réponse g émis par le dispositif d'identification I. Comme visible sur la figure 7, le signal V8 est décalé du signal I6 du temps de propagation du signal δ. La sortie de l'unité dé décision de bits 67 est reliée à un embranchement entre, d'une part, une mémoire-tampon 72 qui est apte à recevoir à la cadence rk le signal V10 pour le délivrer à la faible cadence sk au micro-contrôleur 50, afin qu'il authentifie le signal de réponse g, comme indiqué par exemple à l'étape 10 de la figure 1 et, d'autre part, une entrée d'une porte logique OU exclusif 73. Pour l'authentification du signal de réponse g reçu en provenance du dispositif d'identification, l'unité centrale du véhicule engendre un signal crypté correspondant g, comme indiqué à l'étape 8 de la figure 1. Il est à noter que cette comparaison entre les deux fonctions g s'effectue par auto-corrélation entre les signaux, le seuil d'auto-corrélation acceptable étant par exemple fixé à 90 %, sachant qu'un niveau d'auto-corrélation de 50 % correspond à la comparaison de deux signaux aléatoires.

Le micro-contrôleur 50 délivre le signal g propre au véhicule à une mémoire tampon 74 à la cadence sk, afin qu'il la renvoie à la cadence fk à l'autre entrée de la porte logique 73 précitée. On a représenté sur la ligne V11 le signal g qui correspond exactement au signal g engendré par le dispositif d'identification et émis sur la ligne I6, comme représenté sur la figure 8, mais avec un décalage temporel de 2 δ. La porte logique 73 mélange les signaux V10 et V11 afin de ne délivrer en sortie que les décalages dus au temps de propagation du signal entre le véhicule V et le dispositif d'identification I, comme représenté sur la ligne V12. La sortie de la porte logique 73 est reliée à l'entrée d'un intégrateur 75, qui va délivrer en sortie un signal V13 qui va monter par escalier en fonction du temps, pour chaque créneau C représentatif du temps de propagation du signal. La ligne V13 est reliée à un embranchement entre, d'une part, un premier comparateur 76 recevant sur une autre entrée une valeur limite de seuil 76a qui correspond à la distance de piratage, par exemple 5 à 10 mètres et, d'autre part, un second comparateur 77 recevant sur une autre entrée une autre valeur limite de seuil 77a inférieure à la valeur 76a et qui correspond à la distance de communication autorisée, par exemple 1 à 2 mètres. Selon que l'amplitude du signal de sortie sur la ligne V13 est supérieure ou non à cette valeur limite 76a, un signal de tentative de piratage sera envoyé ou non via la ligne 78 par le premier comparateur 76 au micro-contrôleur 50. De manière analogue, si l'amplitude du signal de sortie sur la ligne V13 est supérieure à la valeur 77a, mais inférieure à la valeur 76a, le second comparateur 77 enverra au micro-contrôleur 50 via la ligne 79, un signal indiquant que la communication se fait hors de la distance autorisée, sans toutefois constituer une tentative de piratage. L'intégrateur 75 va effectuer la somme des décalages temporels élémentaires jusqu'à la fin de la trame d'anti-piratage, comme indiqué par la flèche 75a, à moins que la communication soit interrompue préalablement par les premier et deuxième comparateurs 76 et 77 précités. Le fait de faire la somme des décalages temporels sur la ligne V13 permet de s'affranchir des contraintes de résolution et des incertitudes de mesure liées à un temps de propagation aussi faible que 50 ns qui peut représenter 10 % d'un temps bit de 500 ns.

Enfin, le micro-contrôleur 50 peut délivrer différents signaux de sortie aux autres composants du véhicule par la voie 80 représentée sur les figures 3 et 4.

En variante, on pourrait remplacer les antennes 54 et 63 du véhicule V par une antenne unique 82 représentée en traits interrompus sur la figure 4, laquelle antenne 82 serait reliée à un diplexeur 81 représenté en traits interrompus sur la figure 4, afin de commuter entre le mode de réception et le mode d'émission selon le cas. De manière analogue, on pourrait remplacer les antennes 100 et 112 du dispositif d'identification par une antenne unique 121 reliée à un diplexeur 120, représentés en traits interrompus sur la figure 4. Les diplexeurs 81 et 120 pourraient ainsi communiquer entre eux, comme indiqué par la double flèche T.

## Revendications

1. Système d'accès dit mains libres pour véhicule automobile (V), comportant une unité centrale de commande embarquée sur le véhicule et un dispositif d'identification (I) destiné à être porté par un utilisateur (U) et apte à établir une communication bidirectionnelle à distance et sans fil avec ladite unité centrale, pour authentifier l'utilisateur et commander des moyens de condamnation/décondamnation des serrures des ouvrants lorsque l'utilisateur a été reconnu authentique, ledit système étant apte à établir ladite communication bidirectionnelle lorsque le dispositif d'identification est situé à une distance inférieure à une distance limite prédéterminée du véhicule, ladite unité centrale étant apte à détecter une tentative de piratage provoquant l'arrêt de ladite communication, lorsque un décalage temporel qu'elle détermine est supérieur à une première valeur de seuil prédéterminée (76a), **caractérisé par le fait que** ladite unité centrale est apte à engendrer, à une cadence d'horloge prédéterminée (fk), lors de la communication, un signal numérique (V7) représentatif de données d'authentification, ledit signal étant apte à être émis sous la forme d'un signal d'interrogat ion radio-fréquence (V2) par l'unité centrale, et destiné à être reçu par le dispositif d'identification (I), qui comporte une première boucle à verrouillage de phase (109) pour délivrer un signal d'horloge de référence (f'k) dont la cadence est synchronisée avec celle (fk) du signal d'interrogation précité, le dispositif d'identification étant apte à émettre un signal crypté de réponse (g) en radio-fréquence vers l'unité centrale à ladite cadence de référence, et l'unité centrale comportant une deuxième boucle à verrouillage de phase (68) pour délivrer à une unité de décision de bits (67) un signal d'horloge de référence (rk) dont la cadence est synchronisée avec celle du signal crypté de réponse, ladite unité de décision de bits étant apte à recevoir ledit signal crypté de réponse en provenance du dispositif d'identification, pour délivrer, à ladite cadence de référence, un signal numérique (V10) représentatif dudit signal crypté de réponse, l'unité centrale comportant, en outre, un moyen pour déterminer ledit décalage temporel entre ledit signal (V10) délivré par l'unité de décision de bits (67) et un signal crypté correspondant (V11) engendré par l'unité centrale à ladite cadence prédéterminée (fk).

2. Système selon la revendication 1, **caractérisé par le fait que** ledit moyen de détermination de l'unité centrale comporte un mélangeur (73) apte à mélanger, d'une part, le signal (V10) délivré en sortie de l'unité de décision de bits (67) à ladite cadence de référence (rk) et, d'autre part, ledit signal crypté correspondant (V11) engendré par l'unité centrale à ladite cadence prédéterminée (fk) pour délivrer en sortie du mélangeur un signal (V12) représentatif des décalages temporels successifs de chaque bit dudit signal crypté de réponse (g), le mélangeur étant relié à un intégrateur (75) pour faire la somme des temps de réponse liés à chaque créneau (C) de décalage temporel de bit dudit signal (V12), la sortie dudit intégrateur étant reliée à au moins un premier comparateur (76) pour comparer ladite somme de te mps de réponse avec ladite première valeur de seuil prédéterminée (76a).

3. Système selon la revendication 2, **caractérisé par le fait que** la somme des temps de réponse effectuée par l'intégrateur (75) est arrêtée lorsque l'unité centrale de commande détecte la réception (75a) du dernier bit du signal crypté de réponse en provenance du dispositif d'identification (I).

4. Système selon la revendication 2 ou 3, **caractérisé par le fait que** la sortie de l'intégrateur (75) est reliée à au moins un second comparateur (77) pour comparer ladite somme de temps de réponse avec une autre valeur de seuil prédéterminée (77a) inférieure à ladite première valeur de seuil prédéterminée (76a), au -delà de laquelle est détectée une communication au-delà de la distance limite prédéterminée.

5. Système selon l'une des revendications 1 à 4, **caractérisé par le fait que** le dispositif d'identification (I) comporte un détecteur de fin de trame (119) du signal d'interrogation, apte à déclencher l'émission du signal crypté de réponse (I6), à ladite cadence de référence (f'k) par le dispositif d'identification, lorsque la fin de la trame du signal d'interrogation est détectée.

6. Système selon la revendication 5, **caractérisé par le fait que** ledit détecteur de fin de trame (119) est apte à reconnaître soit des données de fin d'interrogation dans ledit signal d'interrogation, soit des données de début d'interrogation dans ledit signal d'interrogation, pour en déduire la fin de sa trame en fonction du nombre prédéterminé de bits devant être reçus par le dispositif d'identification (I) en provenance de l'unité centrale.

7. Système selon l'une des revendications 1 à 6, **caractérisé par le fait que** le dispositif d'identification (I) comporte un oscillateur (113) générateur d'onde porteuse en radi o-fréquence, relié en sortie à un modulateur de phase ou d'amplitude (114), qui est commandé par le signal numérique crypté de réponse (I6) du dispositif d'identification.

8. Système selon l'une des revendications 1 à 7, **caractérisé par le fait que** le dispositif d'identification comporte une unité de décision de bits (115) dont la cadence de référence (f'k) est délivrée par la première boucle de verrouillage de phase (109), ladite unité de décision de bits recevant en entrée le signal d'interrogation, pour délivrer en sortie un signal numérique à ladite cadence de référence, représentant ledit signal d'interrogation.

9. Système selon l'une des revendications 1 à 8, **caractérisé par le fait que** le signal (V10) délivré en sortie par l'unité de décision de bits (67) de l'unité centrale est comparé par cette dernière avec un signal numérique crypté correspondant (g) engendré par l'unité centrale, afin d'authentifier le dispositif d'identification (I).

10. Système selon l'une des revendications 1 à 9, **caractérisé par le fait que** l'unité centrale comporte un oscillateur générateur d'onde porteuse en radio-fréquence (55), relié à un modulateur de phase ou d'amplitude (56), qui est commandé par ledit signal numérique d'interrogation (V7) engendré par l'unité centrale.

11. Système selon la revendication 10, **caractérisé par le fait que** l'unité centrale est apte à commander successivement l'arrêt puis le démarrage de l'oscillateur (55) de l'unité centrale, selon que celle-ci est en phase d'émission du signal d'interrogation (V7), puis en phase de réception du signal de réponse.

12. Système selon l'une des revendications 1 à 11, **caractérisé par le fait que** ladite cadence d'horloge prédéterminée est une cadence d'horloge haute (fk) supérieure à 2 Kb/s.

## Patentansprüche

1. Handfreies Zugangssystem für Kraftfahrzeuge (V), das eine in dem Fahrzeug befindliche zentrale Steuereinheit und eine Identifikationseinrichtung (I) aufweist, die von einem Benutzer (U) getragen werden soll und dazu dient, eine beiderseitige drahtlose Fernverbindung mit der Zentraleinheit aufzubauen, um den Benutzer zu authentifizieren und Blockierungs-/Freigabemittel der Schlösser der Türen zu steuern, wenn der Benutzer als berechtigt erkannt worden ist; wobei das System so ausgelegt ist, dass die beiderseitige Verbindung aufgebaut wird, wenn sich die Identifikationseinrichtung in einem Abstand von dem Fahrzeug befindet, der geringer als ein bestimmter Maximalabstand ist, wobei die Zentraleinheit ausgelegt ist, einen Einbruchsversuch in das System zu detektieren, der eine Unterbrechung der Verbindung bewirkt, wenn eine von ihr bestimmte Zeitverschiebung größer als ein erster vorgegebener Schwellwert (76a) ist, **dadurch gekennzeichnet, dass** die Zentraleinheit in der Lage ist, während der Verbindung in einem bestimmten zeitlichen Takt (fk) ein für Authentifikationsdaten repräsentatives numerisches Signal (V7) zu erzeugen, wobei das Signal in Form eines radiofrequenten Abfragesignals (V2) von der Zentraleinheit ausgesandt wird und von der Identifikationseinrichtung (I) empfangen werden kann, die eine erste Phasenverriegelungsschaltung (109) zur Abgabe eines zeitlichen Referenzsignals (f'k) aufweist, dessen Takt mit demjenigen (fk) des Abfragesignals synchronisiert ist, wobei die Identifikationseinrichtung ein verschlüsseltes radiofrequentes Antwortsignal (g) mit dem Referenztakt in Richtung Zentraleinheit senden kann und die Zentraleinheit eine zweite Phasenverriegelungsschaltung (68) aufweist, um einer binären Entscheidungseinheit (67) ein zeitliches Referenzsignal (rk) zu übermitteln, dessen Takt mit demjenigen des verschlüsselten Antwortsignals synchronisiert ist, wobei die binäre Entscheidungseinheit das von der Identifikationseinrichtung stammende verschlüsselte Antwortsignal empfangen kann, um ein für das verschlüsselte Antwortsignal charakteristisches numerisches Signal (V10) mit dem Referenzstakt abzugeben, wobei die Zentraleinheit außerdem ein Mittel zur Bestimmung der Zeitverschiebung zwischen dem von der binären Entscheidungseinheit (67) abgegebenen Signal (V10) und einem entsprechenden verschlüsselten, von der Zentraleinheit mit dem vorgegebenen Takt (fk) erzeugten Signal (V11) aufweist.

2. System gemäß Anspruch 1, **dadurch gekennzeichnet, dass** das Bestimmungsmittel der Zentraleinheit einen Mischer (73) aufweist, der einerseits das am Ausgang der binären Entscheidungseinheit (67) mit dem Referenztakt (rk) abgegebene Signal (V10) und andererseits das von der Zentraleinheit mit dem vorgegebenen Takt (fk) erzeugte entsprechende verschlüsselte Signal (V11) so mischen kann, dass am Ausgang des Mischers ein Signal (V12) abgegeben wird, das für die aufeinanderfolgenden zeitlichen Verschiebungen jedes Bits des verschlüsselten Antwortsignals (g) charakteristisch ist, wobei der Mischer mit einem Integrator (75) zur Bildung der Summe der Antwortzeiten verbunden ist, die zu jedem Bit-Zeitverschiebungsimpuls (C) des Signals (V12) gehören, wobei der Ausgang des Integrators mit wenigstens einem ersten Komparator (76) verbunden ist, um die Summe der Antwortzeiten mit dem ersten vorgegebenen Schwellwert (76a) zu vergleichen.

3. System gemäß Anspruch 2, **dadurch gekennzeichnet, dass** die durch den Integrator (75) ermittelte Summe der Antwortzeiten festgehalten wird, wenn die zentrale Steuereinheit den Empfang (75a) des letzten Bit des von der Identifikationseinrichtung (I) stammenden verschlüsselten Antwortsignals detektiert.

4. System gemäß einem der Ansprüche 2 oder 3, **dadurch gekennzeichnet, dass** der Ausgang des Integrators (75) mit wenigstens einem zweiten Komparator (77) verbunden ist, um die Summe der Antwortzeiten mit einem anderen vorgegebenen Schwellwert (77a) zu vergleichen, der niedriger als der erste vorgegebene Schwellwert (76a) ist, oberhalb welchem eine Verbindung jenseits des vorgegebenen Maximalabstandes detektiert wird.

5. System gemäß einem der Ansprüche 1 bis 4, **dadurch gekennzeichnet, dass** die Identifikationseinrichtung (I) einen Detektor für das Ende des Datenübertragungsblocks (119) des Abfragesignals aufweist, welcher die Ausstrahlung des verschlüsselten Antwortsignals (16) mit dem Referenztakt (f'k) durch die Identifikationseinrichtung auslösen kann, wenn das Ende des Datenübertragungsblocks des Abfragesignals detektiert wird.

6. System gemäß Anspruch 5, **dadurch gekennzeichnet, dass** der Detektor des Endes des Datenübertragungsblocks (119) entweder Daten des Endes der Abfrage in dem Abfragesignal oder Daten des Beginns der Abfrage in dem Abfragesignal erkennen kann, um daraus das Ende seines Datenübertragungsblocks in Abhängigkeit von einer bestimmten Anzahl von der Zentraleinheit stammenden Bits ableiten kann, die von der Identifikationseinrichtung (I) empfangen werden müssen.

7. System gemäß einem der Ansprüche 1 bis 6, **dadurch gekennzeichnet, dass** die Identifikationseinrichtung (I) einen Oszillator (113) als Generator der radiofrequenten Trägerwelle aufweist, dessen Ausgang mit einem Phasen- oder Amplitudenmodulator (114) verbunden ist, der durch das verschlüsselte numerische Antwortsignal (16) der Identifikationseinrichtung gesteuert wird.

8. System gemäß einem der Ansprüche 1 bis 7, **dadurch gekennzeichnet, dass** die Identifikationseinrichtung eine binäre Entscheidungseinheit (115) aufweist, deren Bezugstakt (f'k) durch die ersten Phasenverriegelungsschaltung (109) geliefert wird, wobei die binäre Entscheidungseinheit am Eingang das Abfragesignal empfängt, um am Ausgang ein numerisches Signal mit dem Bezugstakt abzugeben, welches das Abfragesignal repräsentiert.

9. System gemäß einem der Ansprüche 1 bis 8, **dadurch gekennzeichnet, dass** das am Ausgang von der binären Entscheidungseinheit (67) der Zentraleinheit abgegebene Signal (V10) von letzterer mit einem entsprechenden verschlüsselten numerischen Signal (g) verglichen wird, das von der Zentraleinheit zur Authentifizierung der Identifikationseinrichtung (I) erzeugt wird.

10. System gemäß einem der Ansprüche 1 bis 9, **dadurch gekennzeichnet, dass** die Zentraleinheit einen als Generator der radiofrequenten Trägerwelle (55) dienenden Oszillator aufweist, der mit einem Phasen- oder Amplitudenmodulator (56) verbunden ist, der durch das von der Zentraleinheit erzeugte numerische Abfragesignal (V7) gesteuert wird.

11. System gemäß Anspruch 10, **dadurch gekennzeichnet, dass** die Zentraleinheit nacheinander das Ausschalten und anschließend das Einschalten des Oszillators (55) der Zentraleinheit steuern kann, so dass dieser in der Emissionsphase des Abfragesignals (V7) und dann in der Empfangsphase des Antwortsignals ist.

12. System gemäß einem der Ansprüche 1 bis 11, **dadurch gekennzeichnet**, das s die vorgegebene zeitliche Taktrate eine hohe Taktrate (fk) von mehr als von 2 Kb/s ist.

## Claims

1. So-called hands-free access system for a motor vehicle (V), including a central control unit on board the vehicle and an identification device (I) intended to be carried by a user (U) and able to establish bidirectional remote and wireless communication with the said central unit, to authenticate the user and control means for locking/unlocking the locks of the leaves when the user has been recognised as authentic, the said system being able to establish the said bidirectional communication when the identification device is situated at a distance less than a predetermined limit distance from the vehicle, the said central unit being able to detect a hacking attempt causing stoppage of the said communication, when a time shift which it determines is greater than a first predetermined threshold value (76a), **characterised by** the fact that the said central unit is able to generate, at a predetermined clock speed (fk), upon communication, a digital signal (V7) representative of authentication data, the said signal being able to be transmitted in the form of a radio frequency interrogation signal (V2) by the central unit, and intended to be received by the identification device (I), which includes a first phase locking loop (109) to deliver a reference clock signal (f'k) the speed of which is synchronised with that (fk) of the above-mentioned interrogation signal, the identification device being able to transmit an encrypted response signal (g) at radio frequency to the central unit at the said reference speed, and the central unit including a second phase locking loop (68) to deliver to a bit decision unit (67) a reference clock signal (rk) the speed of which is synchronised with that of the encrypted response signal, the said bit decision unit being able to receive the said encrypted response signal from the identification device, to deliver, at the said reference speed, a digital signal (V10) representative of the said encrypted response signal, the central unit including, in addition, a means for determining the said time shift between the said signal (V10) delivered by the bit decision unit (67) and a corresponding encrypted signal (V11) generated by the central unit at the said predetermined speed (fk).

2. System as described in claim 1, **characterised by** the fact that the said determination means of the central unit includes a mixer (73) able to mix, on the one hand, the signal (V10) delivered at the output of the bit decision unit (67) at the said reference speed (rk) and, on the other, the said corresponding encrypted signal (V11) generated by the central unit at the said predetermined speed (fk) to deliver at the output of the mixer a signal (V12) representative of the successive time shifts of each bit of the said encrypted response signal (g), the mixer being connected to an integrator (75) to sum the response times linked to each crenulation (C) of bit time shift of the said signal (V12), the output of the said integrator being connected to at least a first comparator (76) to compare the said sum of response times with the said first predetermined threshold value (76a).

3. System as described in claim 2, **characterised by** the fact that the summing of the response times performed by the integrator (75) is stopped when the central control unit detects the reception (75a) of the last bit of the encrypted response signal from the identification device (I).

4. System as described in claim 2 or 3, **characterised by** the fact that the output of the integrator (75) is connected to at least a second comparator (77) to compare the said sum of response times with another predetermined threshold value (77a) lower than the said first predetermined threshold value (76a), beyond which a communication is detected beyond the predetermined limit distance.

5. System as described in one of claims 1 to 4, **characterised by** the fact that the identification device (I) includes an end of frame detector (119) of the interrogation signal, able to initiate transmission of the encrypted response signal (I6), at the said reference speed (f'k) by the identification device, when the end of the frame of the interrogation signal is detected.

6. System as described in claim 5, **characterised by** the fact that the said end of frame detector (119) is able to recognise either end of interrogation data in the said interrogation signal, or start of interrogation data in the said interrogation signal, to deduce from them the end of its frame as a function of the predetermined number of bits having to be received by the identification device (I) from the central unit.

7. System as described in one of claims 1 to 6, **characterised by** the fact that the identification device (I) includes an oscillator (113) generating a radio frequency carrier wave, connected at its output to a phase or amplitude modulator (114), which is controlled by the encrypted response signal (I6) of the identification device.

8. System as described in one of claims 1 to 7, **characterised by** the fact that the identification device includes a bit decision unit (115) the reference speed (f'k) of which is delivered by the first phase locking loop (109), the said bit decision unit receiving at its input the interrogation signal, to deliver at its output a digital signal at the said reference speed, representing the said interrogation signal.

9. System as described in one of claims 1 to 8, **characterised by** the fact that the signal (V10) delivered at its output by the bit decision unit (67) of the central unit is compared by the latter with a corresponding encrypted digital signal (g) generated by the central unit, in order to authenticate the identification device (I).

10. System as described in one of claims 1 to 9, **characterised by** the fact that the central unit includes an oscillator generating a radio frequency carrier wave (55) connected to a phase or amplitude modulator (56), which is controlled by the said digital interrogation signal (V7) generated by the central unit.

11. System as described in claim 10, **characterised by** the fact that the central unit is able to instruct in succession the stopping and then the starting of the oscillator (55) of the central unit, depending on whether this is in the phase of transmission of the interrogation signal (V7), or then in the phase of reception of the response signal.

12. System as described in one of claims 1 to 11, **characterised by** the fact that the said predetermined clock speed is a high clock speed (fk) greater than 2 Kb/s.
